# EUROPÄISCHE PATENTANMELDUNG

(11) **EP 2 138 081 A1**
(43) Veröffentlichungstag der Anmeldung: **30.12.2009**
(21) Anmeldenummer: 09007809.8
(22) Anmeldetag: 15.06.2009
(51) Int. Cl.: A47J 37/07, C10L 5/44

(54) **Grill**

(30) Priorität: 23.06.2008 AT 10032008
(71) Anmelder: Entwicklung von festen Brennstoffen Kienberger Kleedorfer OEG, 1070 Wien (AT)
(72) Erfinder: Kleedorfer, Thomas, 1070 Wien (AT); Kienberger, Thomas, 1170 Wien (AT); Stefanski, Claus, 1070 Wien (AT); Ehrlich, Ulrike, 6370 Kitzbühel (AT)
(74) Vertreter: Puchberger, Peter

(57) **Zusammenfassung**

Die Erfindung betrifft einen Grill geeignet für einen Brennstoff in Form eines Brennelements (16) aus je einer oder mehrerer, mit Mikroorganismen bearbeiteten Strohsorte(n) und einer oder mehreren, mit Mikroorganismen bearbeiteten, Hartholzsorte(n) und/oder Kokosnussschalen besteht, umfassend zumindest eine nach oben offene Brennkammer (1) mit einer Bodenfläche (12) und einer Mantelfläche als Seitenwände und einen darauf anordbaren Rost (2) für das Grillgut, wobei jede Brennkammer (1) zumindest in Ihrer Bodenfläche (12) Öffnungen (10) zur Belüftung aufweist, und dass die Brennkammer auf Stützen (4), welche zur Beabstandung der Brennkammer (1) von der Aufstellfläche dienen, gelagert ist, und wobei jede Brennkammer (1) zur Aufnahme von jeweils einem Brennelement (16) ausgebildet ist. Ferner betrifft die Erfindung ein obengenanntes Brennelement.

## Beschreibung

Die Erfindung betrifft einen Grill geeignet für einen Brennstoff in Form eines Brennelements aus je einer oder mehrerer, mit Mikroorganismen bearbeiteten Strohsorte(n) und einer oder mehreren, mit Mikroorganismen bearbeiteten, Hartholzsorte(n) und/oder Kokosnussschalen, umfassend zumindest eine nach oben offene Brennkammer mit einer Bodenfläche und einer Mantelfläche als Seitenwände und einen darauf anordbaren Rost für das Grillgut.

Des weiteren Betrifft die Erfindung ein Brennelement und ein Heizelement für einen obengenannten Grill.

Griller zum Zubereiten von Speisen auf offener Glut sind seit langem bekannt. Für gewöhnlich besteht ein Grill im einfachsten Fall aus einem feuerfesten Behältnis zur Aufnahme des Brennstoffes und einem darüber anordbaren Rost.

Bei der Wahl des Brennstoffes gibt es im Stand der Technik unterschiedlichste Möglichkeiten, am gängigsten ist jedoch Holzkohle, Holzkohlebrickets oder spezielle Holzschnitzel. Je nach gewählten Brennstoff treten jedoch unterschiedliche Probleme auf, wie beispielsweise umständliche Handhabung beim Entzünden des Brennstoffes, kurze Brenndauer mit schnellabfallender Temperaturkurve, ungenügende Aromaabgabe an das Grillgut oder aber umständliche Entsorgung der Asche.

Aufgrund der obengenannten Umstände ist Grillen daher eine eher aufwendige Art Speisen zuzubereiten, da es für gewöhnlich mit einem hohen Vorbereitungsaufwand des Grills vor dem Grillen, und einem entsprechend hohen Reinigungsaufwand des Grills nach dem Grillen verbunden ist.

Ein möglicher Brennstoff welcher manche der obengenannten Probleme mit den herkömmlichen Brennstoffen beseitigen könnte ist in der AT 411 766 B beschrieben.

Aufgabe der vorliegenden Erfindung ist es somit einen Grill zu schaffen, der die obengenannten Nachteile beseitigt, indem er geeignet ist einen speziellen Brennstoff zu verwenden, wodurch die gesamte Handhabung des Grillvorganges von der Vorbereitung bis zur Reinigung einfach handzuhaben ist. Gleichzeitig soll der Grill es ermöglichen, dass bei Verwendung des speziellen Brennstoffes, eine über einen längeren Zeitraum konstante Temperaturkurve der Glut gehalten werden kann, und dass das von dem Brennstoff freigesetzte Aroma vom Grillgut gut aufgenommen werden kann.

Gelöst wird diese Aufgabe zum Einen durch einen Grill der dadurch gekennzeichnet ist, dass jede Brennkammer zumindest in ihrer Bodenfläche Öffnungen zur Belüftung aufweist, und dass die Brennkammer auf Stützen, welche zur Beabstandung der Brennkammer von der Aufstellfläche dienen, gelagert ist, und wobei jede Brennkammer zur Aufnahme von jeweils einem Brennelement ausgebildet ist.

Ferner wird die Aufgabe gelöst durch ein Brennelement für einen obengenannten Grill, wobei das Brennelement aus einem Brennstoff besteht, der aus je einer oder mehrerer, mit Mikroorganismen bearbeiteten Strohsorte(n) und einer oder mehreren mit Mikroorganismen bearbeiteten, Hartholzsorte(n) und/oder Kokosnussschalen besteht, und wobei das Stroh ausgewählt wird aus Hanfstroh, Leinenstroh, Roggenstroh, und das Hartholz aus Buche, Eiche, Ahorn, Birke, Zwetschke, Eukalyptus und das Brennelement aus einem Stück in Ringform gepressten Brennstoff besteht, wobei dieses Brennelement dadurch gekennzeichnet ist, dass der Ring an seiner Unterseite im Wesentlichen parallel verlaufende Nuten aufweist, wobei in zumindest einer Nut ein Docht angeordnet ist, welcher mit zumindest einem Abschnitt in das Loch des Ringes ragt.

Durch die spezielle Anordnung der Brennkammer und des Brennelements ergeben sich mehrere Vorteile. Zum Einen ist Brennkammer und Brennelement derart aufeinander abgestimmt, dass für jede Brennkammer ein einfach handzuhabendes Brennelement eingesetzt werden kann, welches, ähnlich einer Kerze, mittels eines Dochts einfach zu entzünden ist. Durch den speziellen Aufbau der Brennkammer benötigt man keine zusätzliche Luftzufuhr, um eine Glut zu erreichen, vielmehr entsteht durch das Loch des Brennelements sowie durch die Öffnungen im Boden der Brennkammer eine Sogwirkung welche zu einem raschen Entzünden des Brennelements führen.

Durch die kompakte Ausgestaltung der Brennkammer, welche jeweils ein Brennelement zu allen Seiten ausgenommen der Oberseite hin begrenzt wird die entstehende Hitze der Glut optimal nach oben in Richtung Grillgut fokussiert.

Da das Brennelement aus natürlichen Rohstoffen besteht, ergibt sich für das darüber befindliche Grillgut ein optimales Grillaroma.

Ein weiteres Merkmal eines erfindungsgemäßen Grills ist es, dass der Innenraum jeder Brennkammer in waagrechter Richtung mindestens den Durchmesser eines Brennelements aufweist und maximal einen um zwei Drittel größeren Durchmesser als den Durchmesser des Brennelements aufweist. Innerhalb dieser angegebenen Bereiche kommt es zu einer optimalen Fokussierung der Gluthitze nach oben in Richtung des Grillguts.

Gemäß einem weiteren Merkmal der Erfindung sind die Stützen derart ausgebildet, dass der Abstand zwischen der Bodenfläche der Brennkammer und der Aufstellfläche mindestens 2 cm beträgt. Ab einem Abstand von 2 cm kommt ausreichend Luft durch die Öffnungen in der Bodenfläche der Brennkammer zum Brennelement und gleichzeitig ist die nach unten abgestrahlte Hitze in Richtung Aufstellungsfläche ausreichend gering um diese nicht zu beschädigen.

Im Inneren der Brennkammer auf der Bodenfläche und oder der Mantelfläche können, gemäß einem weiteren Merkmal der Erfindung, mehrere Abstandshalter zum Zentrieren des Brennelements angeordnet sein. Durch die Abstandshalter ist es für den Benutzer einfach das Brennelement in die Brennkammer einzusetzen und wieder zu entfernen, gleichzeitig sorgen die Abstandshalter dafür, dass das Brennelement zentriert in der Brennkammer sitzt und zu allen Seiten hin Luft am Brennelement vorbeiströmen kann, was das Anzünden und die rasche Hitzeentwicklung fördert.

Die in der Bodenfläche der Brennkammer befindlichen Öffnungen sollen, gemäß einem weiteren Merkmal der Erfindung, maximal 8 mm im Durchmesser aufweisen und im Wesentlichen gleichmäßig über die Bodenfläche verteilt sein, wobei die Gesamtfläche aller Öffnungen zumindest einem Drittel der Gesamtfläche der Bodenfläche entspricht. Dieses Verhältnis und Verteilmuster der Lüftungsöffnungen hat sich als optimal herausgestellt was die rasche Entzündung des Brennelements betrifft.

Zusätzlich zu den Öffnungen in der Bodenfläche können weitere Öffnungen zur Belüftung in der Mantelfläche der Brennkammer angeordnet sein, wobei bevorzugt sechs Öffnungen in der Mantelfläche vorgesehen sind. In besonders einfacher Weise können diese seitlichen Belüftungsöffnungen durch Ausstanzen aus der Mantelfläche erzielt werden, wobei der ausgestanzte Abschnitt nach Innen gebogen wird und somit gleichzeitig den Abstandshalter für das Brennelement bildet.

Ein weiteres Merkmal der Erfindung ist es, dass ein nach oben offenes Gehäuse vorgesehen ist, in welchem die Brennkammer und der Rost anordbar sind. Durch die Anordnung der Brennkammer und des Rostes in einem gemeinsamen Gehäuse ist der Grill einerseits leicht und kompakt zu transportieren und andererseits dient das Gehäuse zum Auffangen von Asche bzw Verschmutzungen, welche aus der Brennkammer und vom Rost abgegeben werden.

Es ist ein weiteres Merkmal der Erfindung, dass mehrere Brennkammern bevorzugt zwei, drei oder vier vorgesehen sind, wobei die Brennkammern miteinander über Stege verbunden sind und in einem gemeinsamen Gehäuse anordbar sind. Durch das Vorsehen mehrerer Brennkammern können Griller in unterschiedlichen Größen für unterschiedliche Zwecke hergestellt werden, so zum Beispiel ein oder zwei Brennkammern in einem Grill für Single-Haushalte oder aber auch drei oder vier oder auch mehrere Brennkammern für Familienhaushalte oder größere Gruppen.

Ferner ist es ein Merkmal der Erfindung, dass der Rost für jede Brennkammer einen Zentrierbereich aufweist, welcher über der Brennkammer zentriert anordbar ist, wobei der Rost vom jeweiligen Zentrierbereich aus radial nach außen verlaufende Nuten aufweist, und wobei die Nuten jeweils an einem Übergangsbereich zwischen Rostfläche und Innenwandfläche der Nut an der Innenwandfläche liegende in Längsrichtung der Nut verlaufende Schlitze aufweisen, welche derart ausgebildet sind, das Rauch und Aromastoffe in der Dampfphase aus der Brennkammer durch die Schlitze hindurchtreten können. Durch die spezielle Anordnung der Schlitze können die Hitze und die Aromastoffe des Brennstoffes optimal nach oben in das Grillgut eindringen. Gleichzeitig gewährleisten die Schlitze einen durchgängigen Luftweg von der Unterseite der Brennkammer durch den Rost hindurch nach oben, was die Sogwirkung, welche für eine gleichmäßige Glut erforderlich ist, sicherstellt. Die Schlitze sind derart an der Innenwandfläche der Nuten angeordnet, dass vom Grillgut herabtropfende Flüssigkeit und Fett nicht durch den Rost hindurch auf den glühenden Brennstoff fallen. Dadurch wird die Entstehung der krebserregenden Stoffe, welche beim Verbrennen von Fett entstehen können, vermindert.

Entsprechend einem weiteren Merkmal der Erfindung sind die Nuten in Richtung Zentrierbereich hin verjüngend ausgebildet, wobei am vom Zentrierbereich entfernt gelegenen Ende jeder Nut, eine Öffnung im Nutengrund zum Abfließen von am Rost befindlichen Flüssigkeiten, wie beispielsweise Fett, angeordnet ist. Durch diese Ausgestaltung des Rostes kann also vom Grillgut herabtropfende Flüssigkeit nach außen vom Mittelpunkt der Brennkammer weg abfließen und durch die Öffnungen im Nutengrund in das Gehäuse hinabtropfen. Die Nuten sind entsprechend lang ausgebildet dass sie über die Brennkammer hinwegreichen, sodass das abfließende Fett sich im Gehäuseboden sammelt.

Gemäß einem weiteren Merkmal der vorliegenden Erfindung sind bei einem erfindungsgemäßen Brennelement die Nuten an der Unterseite des Ringes mit Strohspänen gefüllt, und die Nuten sowie die Oberflächen des Ringes sind mit einer Schicht aus Stearin und/oder Paraffin überzogen. Diese spezielle Ausgestaltung des Brennelements führt dazu, dass das Brennelement schnell entzünden werden kann. Durch einfaches Anzünden des durch das Loch ragenden Dochtes entzünden sich zuerst die in den Nuten an der Unterseite des Ringes befindlichen Strohspäne, welche durch das ausgehärtete Stearin oder Paraffin in den Nuten verklebt sind. Die Kombination aus lose gepackten Strohspänen und Stearin und/oder Paraffin zusammen mit der Sogwirkung der Brennkammer führt zu einem raschen Entzünden an der Unterseite des Brennelementes und zu einem ebenso raschen Ausbreiten der Flammen über die gesamte mit Stearin und/oder Paraffin besprühte Oberfläche des Ringes.

Als zusätzliches Merkmal der Erfindung, kann der Ring mit Stearin und/oder Paraffin getränkt sein. Dadurch kommt es auch zu einer schnelleren Entzündung des restlichen dichter gepackten Materials des Brennelements.

Zur Verbesserung des Grillaromas können, gemäß einem weiteren Merkmal der Erfindung, dem Brennelement weitere Gewürz und/oder Geschmacksstoffe beigemengt sein.

Entsprechend einem weiteren Merkmal der Erfindung, kann ein elektrisches Heizelement vorgesehen sein, welches für einen oben beschriebenen Grill geeignet ist. Ein derartiges Heizelement kann derart ausgestaltet sein, dass es in die Brennkammer des Grills anstelle des Brennelements eingesetzt werden kann, wobei die elektrischen Anschlüsse des Heizelements im eingebauten Zustand an der, der Bodenfläche der Brennkammer zugewandten Seite, angeordnet sind. Das elektrische Heizelement kann eine entsprechende Glühwendel sein, wobei der elektrische Anschluss mit dem Kabel durch eines der Lüftungsöffnungen in der Bodenfläche der Brennkammer geführt wird. Durch das Vorsehen eines elektrischen Heizelements kann der Grill auch einfach für die Verwendung in geschlossenen Räumen adaptiert werden.

Durch die kompakte und modulare Bauweise des Grills sowie der Brennelemente können diese auch gemeinsam als Grillsystem bestehend aus einem Grill und einem Brennelement oder bestehend aus einem Grill und einem Heizelement verkauft werden.

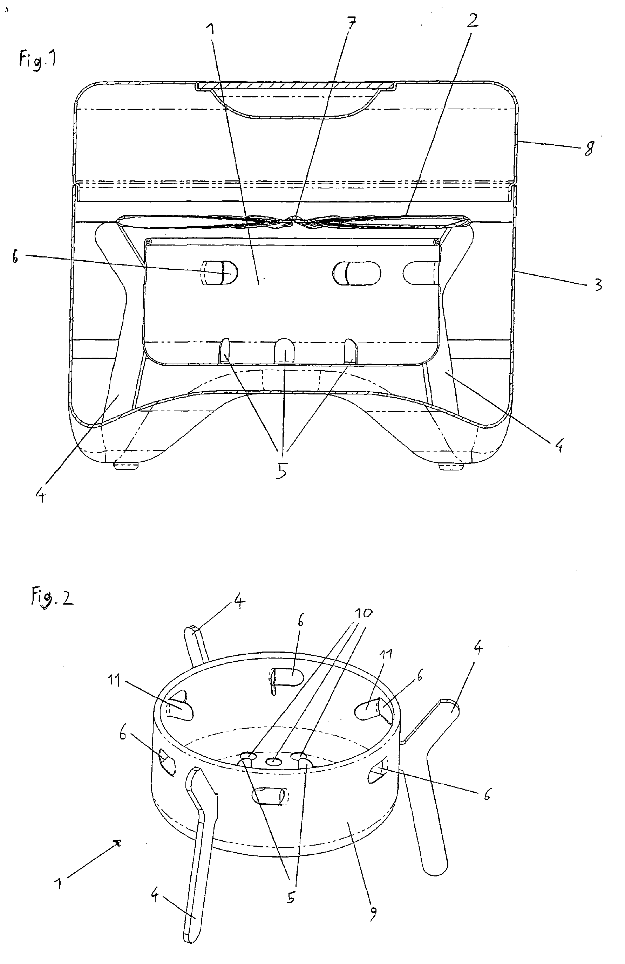

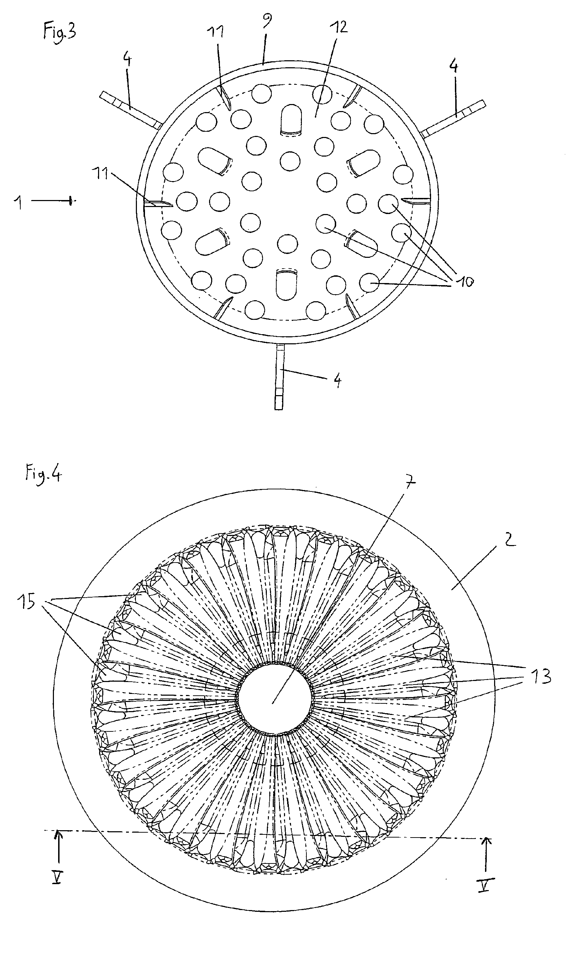

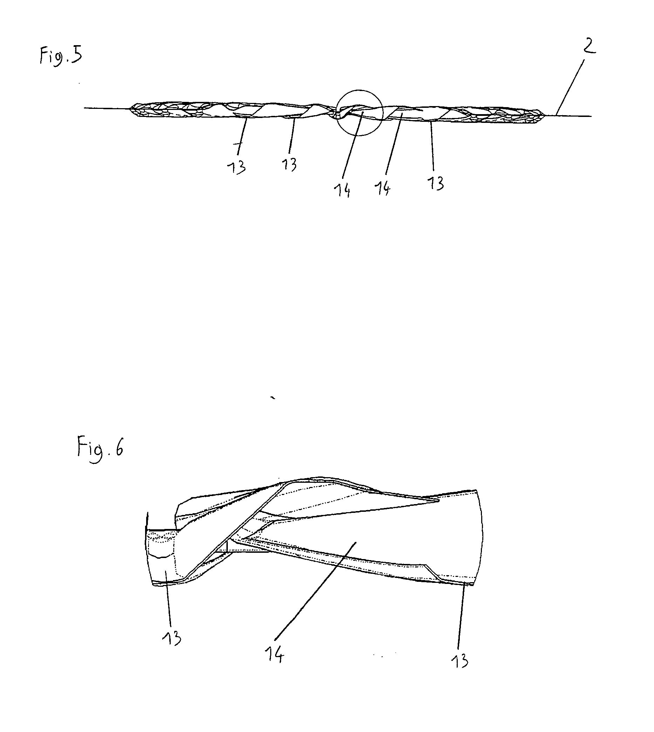

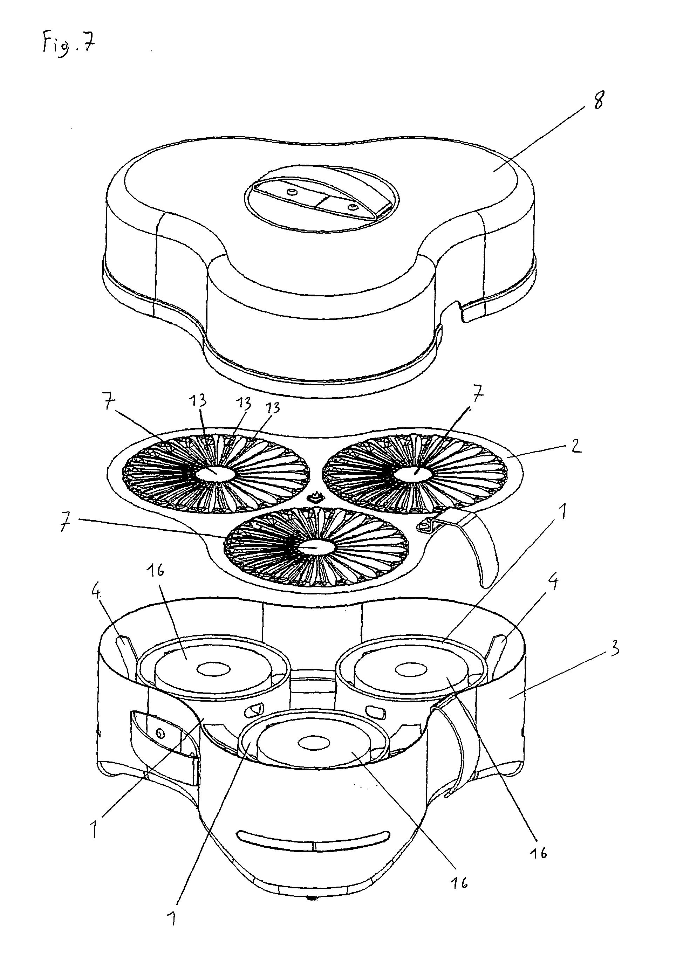

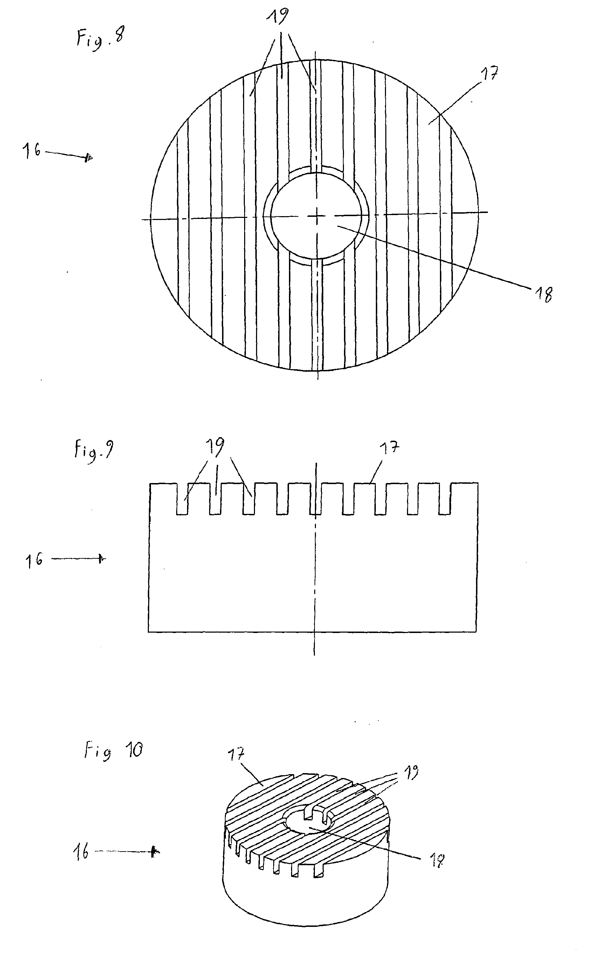

Weitere Merkmale der Erfindung sind den Ansprüchen, der Beschreibung sowie den beiliegenden Zeichnungen zu entnehmen, wobei Fig. 1 einen Querschnitt durch einen zusammengebauten Grill mit einer Brennkammer zeigt. Fig. 2 zeigt eine perspektivische Ansicht der Brennkammer des Grills aus Fig. 1. Fig. 3 zeigt eine Aufsicht auf die Brennkammer aus Fig. 2. Die Fig. 4 zeigt eine Aufsicht auf einen Rost gemäß der Ausführungsform nach Fig. 1. Die Fig. 5 zeigt einen Querschnitt des Rosts aus Fig. 4. Fig. 6 zeigt einen Detailausschnitt des Querschnitts aus Fig. 5. Fig. 7 zeigt eine Explosionsansicht einer alternativen Ausführungsform eines Grills mit drei Brennkammern. Fig. 8 zeigt eine Aufsicht auf die Unterseite eines erfindungsgemäßen Brennelements. Fig. 9 zeigt eine Seitenansicht des Brennelements aus Fig. 8. Fig. 10 zeigt eine perspektivische Ansicht des Brennelements aus den Fig. 8 und 9.

Die in Fig. 1 gezeigte Ausführungsform eines erfindungsgemäßen Grills mit einer Brennkammer 1 zeigt den Grill in einer Querschnittsansicht in zusammengebauten Zustand. Die auf Stützen 4 befindliche Brennkammer 1 ist in einem Gehäuse 3 angeordnet, welches mit einer Garhaube 8 abdeckbar ist. Auf den oberen Enden der Stützen 4 sind die Auflagepunkte für den Rost 2. Weiters ist in dieser Figur ersichtlich die Abstandshalter 5 auf der Bodenfläche der Brennkammer 1 sowie die seitlichen Öffnungen 6 in der Mantelfläche. Der Zentrierbereich 7 des Rostes 2 befindet sich exakt über dem Mittelpunkt der Brennkammer 1.

Die Brennkammer 1 kann beispielsweise aus Edelstahl gefertigt sein, dessen Wärmeleiteigenschaften sehr günstig sind und das Material sehr beständig ist. Die übrigen Bestandteile Rost 2, Gehäuse 3 und Garhaube 8 sind in einer bevorzugten Ausführungsform mit Email beschichtet. Es hat sich herausgestellt, dass Email ausgesprochen geeignet für diese Art von Grill ist, da es einerseits die hohen Temperaturen aushält und auf der anderen Seite 100%-ig lebensmittelecht ist.

Fig. 2 zeigt eine perspektivische Ansicht der Brennkammer 1 aus Fig. 1. In dieser Ansicht sind weiters ersichtlich die seitlichen Abstandshalter 11, welche durch Ausstanzen und Umbiegen einfach herzustellen sind und wodurch gleichzeitig die seitlichen Öffnungen 6 in der Mantelfläche 9 gebildet werden. Des weiteren sieht man die Öffnungen 10 in der Bodenfläche der Brennkammer 1.

Fig. 3 zeigt eine Aufsicht auf die Brennkammer aus Fig. 2. Wie in dieser Ansicht zu sehen ist, sind die Öffnungen 10 in der Bodenfläche 12 gleichmäßig über die gesamte Bodenfläche 12 der Brennkammer 1 verteilt, wobei sowohl der Durchmesser jeder einzelnen Öffnung 10 sowie auch das Verhältnis der Gesamtfläche der Öffnungen 10 zur Bodenfläche 12 genau festgesetzt ist. Die Öffnungen 10 haben einen Einzeldurchmesser, welcher nicht größer als 8 mm ist und die Gesamtfläche aller Öffnungen beträgt zumindest ein Drittel der Gesamtfläche der Bodenfläche.

Die Fig. 4 bis 6 zeigen einen Rost gemäß der Ausführungsform aus Fig. 1 eines erfindungsgemäßen Grills. Der Rost 2 weist einen Zentrierbereich 7 auf, sowie radial nach außen verlaufende Nuten 13, welche am äußeren Ende am Nutengrund Öffnungen 15 aufweisen.

In der in Fig. 5 gezeigten nach der Linie V-V aus Fig. 4 geschnittenen Querschnittsansicht sieht man ebenfalls die seitlich an der Nuteninnenwand angeordneten Schlitze 14, durch welche Hitze und Aromastoffe aus der Brennkammer durch den Rost in das Grillgut eindringen können.

Die in Fig. 7 gezeigte Explosionsansicht einer alternativen Ausführungsform eines erfindungsgemäßen Grills zeigt einen Grill mit drei Brennkammern 1, welche mittels Stege miteinander verbunden sind, und auf Stützen 4 in einem Gehäuse 3 angeordnet sind. Ein Rost 2 mit entsprechend drei Zentrierbereichen 7 kann oberhalb der Brennkammern 1 angeordnet werden. Ein wesentlicher Vorteil des Aufbaus ist die einfache Handhabung bei der Vorbereitung des Grills sowie auch bei der Reinigung. Bei der Vorbereitung des Grills müssen lediglich drei Brennelemente 16 in die Brennkammern 1 eingesetzt werden und mittels des im Loch der Brennelemente 16 befindlichen Dochte angezündet werden. Durch die spezielle Ausgestaltung der Brennkammern 1 sowie der Brennelemente verteilt sich das Feuer automatisch über das gesamte Brennelement und nachdem die Flammen erloschen sind, glühen die Brennelemente mit einer relativ konstanten Temperaturkurve für mindestens eine Stunde. Die relativ konstante Temperaturkurve wird durch die spezielle Gestalt der Brennkammern 1 erreicht, welche die Hitze der Brennelemente gezielt nach oben fokussieren. Des weiteren glüht das kompakt gepresste Brennelement lange und gleichmäßig ohne aufzuquellen oder unmittelbar in sich zusammenzufallen. Nach dem Ausglühen können die Grillringe mit einer Zange aus der Brennkammer entfernt werden und durch neue ersetzt werden, wenn man das Grillen fortsetzen möchte.

Zur Reinigung des Grills entfernt man die ausgebrannten und abgekühlten Grillringe. Die verbleibende Asche sowie vom Rost abgelaufenes Fett befindet sich im Gehäuse 3 und kann mit diesem einfach abtransportiert werden. Durch die modulare Bauweise des Grills können je nach Ausführungsform die einzelnen Bestandteile wie Rost, Brennkammer sowie Gehäuse und Garhaube einfach im Geschirrspüler gereinigt werden.

Die Fig. 8 bis 10 zeigen eine bevorzugte Ausführungsform eines Brennelements 16, wobei die Unterseite des Brennelements 16 mit 17 bezeichnet ist. Auf der Unterseite 17 des Brennelements befinden sich im Wesentlichen parallel verlaufende Nuten 19 in welche einerseits ein Abschnitt des Dochts eingelegt ist sowie Strohspäne mittels aufgesprühten Stearin und/oder Paraffin in die Nuten 19 gefüllt sind.

Ein Abschnitt des Dochts ragt durch das Mittelloch 18 des Brennelements nach oben, um das Anzünden zu erleichtern.

## Patentansprüche

1. Grill geeignet für einen Brennstoff in Form eines Brennelements (16) aus je einer oder mehrerer, mit Mikroorganismen bearbeiteten Strohsorte(n) und einer oder mehreren, mit Mikroorganismen bearbeiteten, Hartholzsorte(n) und/oder Kokosnussschalen besteht, umfassend zumindest eine nach oben offene Brennkammer (1) mit einer Bodenfläche (12) und einer Mantelfläche als Seitenwände und einen darauf anordbaren Rost (2) für das Grillgut, wobei jede Brennkammer (1) zumindest in Ihrer Bodenfläche (12) Öffnungen (10) zur Belüftung aufweist, und wobei die Brennkammer auf Stützen (4), welche zur Beabstandung der Brennkammer (1) von der Aufstellfläche dienen, gelagert ist, und wobei jede Brennkammer (1) zur Aufnahme von jeweils einem Brennelement (16) ausgebildet ist, **dadurch gekennzeichnet, dass** der Innenraum jeder Brennkammer (1) in waagrechter Richtung mindestens den Durchmesser eines Brennelements (16) aufweist und maximal einen um 2/3 größeren Durchmesser als den Durchmesser des Brennelements (16) aufweist, und dass die Öffnungen (19) in der Bodenfläche (12) maximal 8 mm Durchmesser aufweisen und im Wesentlichen gleichmäßig über die Bodenfläche (12) verteilt sind, und dass die Gesamtfläche aller Öffnungen (10) zumindest einem Drittel der Gesamtfläche der Bodenfläche (12) entspricht.

2. Grill nach Anspruch 1, **dadurch gekennzeichnet, dass** die Stützen (4) derart ausgebildet sind, dass der Abstand zwischen Bodenfläche (12) der Brennkammer (1) und Aufstellfläche mindestens 2 cm beträgt.

3. Grill nach Anspruch 1 oder 2, **dadurch gekennzeichnet, dass** im Inneren der Brennkammer (1) auf der Bodenfläche (12) und/oder der Mantelfläche (9) mehrere Abstandshalter (5,11) zum Zentrieren des Brennelements (16) angeordnet sind.

4. Grill nach einem der Ansprüche 1 bis 3, **dadurch gekennzeichnet, dass** zusätzliche Öffnungen (6) zur Belüftung in der Mantelfläche (9) der Brennkammer (1) angeordnet sind, wobei bevorzugt sechs Öffnungen (6) in der Mantelfläche (9) vorgesehen sind.

5. Grill nach einem der Ansprüche 1 bis 4, **dadurch gekennzeichnet, dass** ein nach oben offenes Gehäuse (3) vorgesehen ist, in welchem die Brennkammer
(1) und der Rost (2) anordbar ist.

6. Grill nach einem der Ansprüche 1 bis 5, **dadurch gekennzeichnet, dass** mehrere Brennkammern (1), bevorzugt 2, 3 oder 4 vorgesehen sind, wobei die Brennkammern (1) miteinander über Stege verbunden sind und in einem gemeinsamen Gehäuse (3) anordbar sind.

7. Grill nach einem der Ansprüche 1 bis 6, **dadurch gekennzeichnet, dass** der Rost (2) für jede Brennkammer (1) einen Zentrierbereich (7) aufweist, welcher über der Brennkammer (1) zentriert anordbar ist, wobei der Rost (2) vom jeweiligen Zentrierbereich (7) aus radial nach außen verlaufende Nuten (13) aufweist, und wobei die Nuten (13) jeweils an einem Übergangsbereich zwischen Rostfläche und Innenwandfläche der Nut an der Innenwandfläche liegende in Längsrichtung der Nut (13) verlaufende Schlitze (14) aufweisen, welche derart ausgebildet sind, dass Rauch und Aromastoffe in der Dampfphase aus der Brennkammer (1) durch die Schlitze (14) hindurchtreten können.

8. Grill nach Anspruch 7, **dadurch gekennzeichnet, dass** Die Nuten (13) in Richtung Zentrierbereich (7) hin verjüngend ausgebildet sind, wobei am vom Zentrierbereich (7) entfernt gelegenen Ende jeder Nut (13) eine Öffnung (15) im Nutengrund zum Abfließen von Am Rost (2) befindlichen Flüssigkeiten, wie beispielsweise Fett, angeordnet ist.

9. Brennelement (16) für einen Grill gemäß einem der Ansprüche 1 bis 8, wobei das Brennelement (16) aus einem Brennstoff besteht, der aus je einer oder mehrerer, mit Mikroorganismen bearbeiteten Strohsorte(n) und einer oder mehreren, mit Mikroorganismen bearbeiteten, Hartholzsorte(n) und/oder Kokosnussschalen besteht, und wobei das Stroh ausgewählt wird aus Hanfstroh, Leinenstroh, Roggenstroh, und das Hartholz aus Buche, Eiche, Ahorn, Birke, Zwetschke, Eukalyptus und das Brennelement (16) aus einem Stück in Ringform gepressten Brennstoff besteht, **dadurch gekennzeichnet, dass** der Ring an seiner Unterseite (17) im Wesentlichen parallel verlaufende Nuten (19) aufweist, wobei in zumindest einer Nut (19) ein Docht angeordnet ist welcher mit zumindest einem Abschnitt in das Loch (18) des Ringes ragt.

10. Brennelement (16) nach Anspruch 9, **dadurch gekennzeichnet, dass** die Nuten (19) an der Unterseite des Rings mit Strohspänen gefüllt sind, und das die Nuten (19) sowie die Oberflächen des Ringes mit einer Schicht aus Stearin und/oder Paraffin überzogen sind.

11. Brennelement (16) nach Anspruch 9 oder 10, **dadurch gekennzeichnet, dass** der Ring mit Stearin und/oder Paraffin getränkt ist.

12. Brennelement (16) nach einem der Ansprüche 9 bis 11, **dadurch gekennzeichnet, dass** das Brennelement (16) weitere Gewürz- und/oder Geschmackstoffe enthält.

13. Grillsystem bestehend aus einem Grill nach einem der Ansprüche 1 bis 8 und einem Brennelement (1) nach einem der Ansprüche 9 bis 12.
